(19) Europäisches Patentamt

European Patent Office

Office européen des brevets

(11) **EP 4 717 669 A1**

(12) **EUROPEAN PATENT APPLICATION**

(43) Date of publication:
**01.04.2026 Bulletin 2026/14**

(21) Application number: **24203295.1**

(22) Date of filing: **27.09.2024**

(51) International Patent Classification (IPC):
*C01B 25/00* (2006.01)    *B22F 9/04* (2006.01)
*B22F 9/18* (2006.01)    *B82Y 30/00* (2011.01)
*B82Y 40/00* (2011.01)    *C01B 25/02* (2006.01)
*C22B 11/00* (2006.01)

(52) Cooperative Patent Classification (CPC):
**C01B 25/003; B22F 1/054; B22F 9/24; B82Y 30/00;
B82Y 40/00; C01B 25/02; C22B 11/04;
C22B 11/042; C22B 11/046; C22C 32/0021;
B22F 2009/245**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Freie Universität Berlin
14195 Berlin (DE)**

(72) Inventors:
• **Haag, Rainer
 12209 Berlin (DE)**
• **Bawadkji, Obida
 10407 Berlin (DE)**
• **Müller, Christian
 14055 Berlin (DE)**

(74) Representative: **Maikowski & Ninnemann
Patentanwälte Partnerschaft mbB
Postfach 15 09 20
10671 Berlin (DE)**

(54) **METHOD FOR SYNTHESIZING BLACK PHOSPHORUS - POLYGLYCEROL NANOPARTICLES AND METHOD FOR RECOVERING A PRECIOUS METAL FROM A PRECIOUS METAL CONTAINING MATRIX**

(57) The invention relates to a method for synthesizing black phosphorus - polyglycerol (BP-PG) nanoparticles comprising the step of adding (100) black phosphorus (BP) nanoparticles, glycidol and a plurality of beads (10) to a chamber (21) of a milling device (20) and the step of rotating (200) the chamber (21) over a defined period of time. The invention also relates to a method for recovering a precious metal from a precious metal containing matrix comprising the step of providing (300) the precious metal containing matrix in the form of a solution containing dissolved precious metal ions and the step of adding (400) black phosphorus - polyglycerol (BP-PG) nanoparticles to the solution, wherein the black phosphorus - polyglycerol (BP-PG) nanoparticles are synthesized using the method for synthesizing black phosphorus - polyglycerol (BP-PG) nanoparticles.

**FIG 1**

EP 4 717 669 A1

**Description**

The invention relates to a method for recovering a precious metal from a precious metal containing matrix and to a method for synthesizing black phosphorus - polyglycerol nanoparticles.

The global amount of electronic waste is increasing constantly. On the other hand, the demand of new electronic devices is increasing too. Therefore, there is a need to recover precious metals such as gold, palladium and platinum from electronic waste in order to make the precious metals available anew for the production of new electronic devices.

To recover precious metals from complex matrices, hydrometallurgical processes are known, wherein solutions of acid or basic leaching agents are used to dissolve the precious metals. Said agents include for example cyanide, sulfide, nitric acid, sulfuric acid, thiosulfate, thiourea and halides. The hydrometallurgical processes rely on techniques for concentrating the precious metals such as electrodeposition, electrorefining, precipitation, cementation, solvent extraction, ion exchange and ion adsorption. These techniques often are resource-intensive and produce high costs and hazardous byproducts.

The first object underlying the present invention is to provide a method for recovering precious metals from precious metal containing matrices, such as electronic waste or mining waste, that is environmentally friendly and has an enhanced recovery efficiency.

Said object is achieved according to the invention by a method for recovering a precious metal from a precious metal containing matrix with the features of claim 11. The characteristic feature of this method is the use of black phosphorus - polyglycerol nanoparticles.

Black phosphorus - polyglycerol nanoparticles may, depending on the way they have been synthesized, have different properties. So far, black phosphorus - polyglycerol nanoparticles have been synthesized in solvent-based procedures where polyglycerol is functionalized onto black phosphorus nanoparticles. As a result, the properties of the initial components, namely black phosphorus nanoparticles and polyglycerol, are attenuated. Furthermore, the solvent-based procedures are complex and time consuming, have a low yield and require potentially toxic and environmentally unfriendly solvents. To make black phosphorus - polyglycerol nanoparticles particularly suited for recovering a precious metal from a precious metal containing matrix, these nanoparticles need to be highly dispersible in aqueous solutions and to have a homogeneous architecture.

The second object underlying the present invention is to provide a method for synthesizing black phosphorus - polyglycerol nanoparticles that are highly dispersible in aqueous solutions and have a homogeneous architecture while the method circumvents the disadvantages of the solvent-based procedures.

Said object is achieved according to the invention by a method for synthesizing black phosphorus - polyglycerol nanoparticles with the features of claim 1. Specific embodiments of the invention are specified in the dependent claims.

Accordingly, the method for synthesizing black phosphorus - polyglycerol nanoparticles comprises the step of adding black phosphorus nanoparticles, glycidol and a plurality of beads to a chamber of a milling device and the step of rotating the chamber filled with the black phosphorus nanoparticles, the glycidol and the plurality of beads over a defined period of time.

The method according to the invention allows to synthesize a nanohybrid material that retains the distinct characteristics of both, black phosphorus nanoparticles and polyglycerol. The nanohybrid material combines a solid inorganic nanomaterial (black phosphorus) and a liquid organic nanomaterial (polyglycerol). Furthermore, the method according to the invention is efficient and environmentally friendly.

In one embodiment, the black phosphorus nanoparticles and the glycidol are added to the chamber in a specific mass ratio which ranges from 1:10 to 15:1, preferably from 1:10 to 10:1. For example the mass ratio is 1:1. The amount of black phosphorus nanoparticles can determine the efficiency of the nanohybrid material for precious metal recovery, and the amount of polyglycerol its water-dispersibility and nanoparticle stabilization quality. The mass ratio of the beads on the one hand and black phosphorus nanoparticles and glycidol on the other hand may range from 25:1 to 125:1. Preferably this mass ratio is 100:1.

The period of time over which the step of rotating the chamber is performed may range from 1 min to 60 min. Preferably this period is about 15 min.

The step of rotating the chamber serves to transform the black phosphorus nanoparticles and the glycidol in a mechanochemical process to form black phosphorus - polyglycerol nanoparticles. The beads are moved by the rotating chamber and thus provide energy to the reactants (black phosphorus nanoparticles and glycidol) by the impact of the beads. Preferably, in the mechanochemical process the glycidol undergoes an anion ring opening polymerization. This allows the functionalization of the black phosphorus nanoparticles with polyglycerol. The process allows the polymerization of glycidol mechanochemically, in a solventless approach. Glycidol is a liquid epoxide monomer. So far, liquid epoxide polymers have not been polymerized in a solventless approach. Mechanochemical polymerization has been performed so far only starting from solid-state high molecular weight epoxide monomers.

To perform the mechanochemical process efficiently, it may be performed in the chamber of a mechanochemical device or mechanochemical milling device. The mechanochemical milling device may be a ball mill or a vibrator mill. The mechanochemical device may be a twin-screw extruder.

In one embodiment, the black phosphorus nanoparticles used to synthesize the black phosphorus - polyglycerol nanoparticles are obtained from red phosphorus powder. For transforming red phosphorous powder to black phosphorus nanoparticles, the red phosphorus powder and a plurality of beads may be added to a chamber of a milling device. The chamber filled with the red phosphorous powder and the plurality of beads is rotated over a defined period of time. Again, the beads are moved by the rotating chamber and thus provide energy to the red phosphorus powder by the impact of the beads. The step of rotating the chamber serves to induce an allotropic conversion from the red phosphorous to the black phosphorous. For this process, the beads and the red phosphorus powder may be added to the chamber in a mass ratio of 25:1 to 100:1. The period of time over which the step of rotating the chamber is performed may range from 1 min to 4 h. Preferably this period of time is about 1 h.

The beads used to synthesize black phosphorus - polyglycerol nanoparticles and the beads used to obtain black phosphorous nanoparticles may be of the same type. That means they may be of the same size, shape and material. In particular, the beads may have globally a spherical shape. Their diameter may range from 5 mm to 50 mm. However, the diameter may be chosen in dependence of the volume of the chamber. Furthermore, the beads to be added with the black phosphorus nanoparticles and the glycidol to the chamber as well as the beads to be added with the red phosphorous powder to the chamber may be made of stainless steel.

To provide sufficient energy to the black phosphorous nanoparticles and the glycidol for synthesizing black phosphorous - polyglycerol nanoparticles and/or to the red phosphorous powder for obtaining black phosphorous nanoparticles, the chamber containing the black phosphorus nanoparticles, the glycidol and the plurality of beads and/or the red phosphorous powder and the plurality of beads, respectively, may be rotated at a speed of 400 to 700 rounds per minute (rpm). Preferably this speed is about 600 rpm. However, the speed may depend on the properties of the specific milling device.

As already mentioned above, the invention also relates to a method for recovering a precious metal from a precious metal containing matrix. The method according to the invention comprises a plurality of steps. First, the precious metal containing matrix is provided in the form of a solution containing dissolved precious metal ions (step i). Then black phosphorus - polyglycerol nanoparticles are added to the solution (step ii). The black phosphorus - polyglycerol nanoparticles are synthesized using the method for synthesizing black phosphorus - polyglycerol nanoparticles according to the invention. In the following step iii, the solution and the black phosphorus - polyglycerol nanoparticles are stirred for allowing an electron transfer from the black phosphorus - polyglycerol nanoparticles to the precious metal ions. The precious metal ions are reduced to zero-valent solids that precipitate as precious metal nanoparticles out of solution. The black phosphorus - polyglycerol nanoparticles thus act as a reducing agent. After stirring, sedimentation of the precious metal nanoparticles takes place (step iv). The precious metal nanoparticles are carried by the black phosphorus - polyglycerol nanoparticles. In step iv also sedimentation of pure black phosphorus - polyglycerol nanoparticles may take place. Thus a sediment and a supernatant are present as separated phases.

In step ii, instead of or in addition to black phosphorus - polyglycerol nanoparticles, mechanochemically synthesized black phosphorus nanoparticles are added to the solution. The black phosphorus nanoparticles have the same role (reducing agent) as the black phosphorus - polyglycerol nanoparticles in the method for recovering a precious metal. The mechanochemically synthesized black phosphorus nanoparticles may be obtained from red phosphorus powder. The mechanochemically synthesized black phosphorus nanoparticles used here may be the same as the black phosphorus nanoparticles used to synthesize the black phosphorus - polyglycerol nanoparticles. The mechanochemically synthesized black phosphorus nanoparticles used here may be synthesized in the same manner as the black phosphorus nanoparticles used to synthesize the black phosphorus - polyglycerol nanoparticles.

Using black phosphorus - polyglycerol nanoparticles for recovering the precious metal has shown a good recovery efficiency. Furthermore, due to its physicochemical properties separation from aqueous solutions is simple and efficient.

In one embodiment, the sedimentation step (step iv) is followed by an oxidation step. In the oxidation step an oxygen containing oxidizing agent is added for reaction with the black phosphorus - polyglycerol nanoparticles (and/or black phosphorus nanoparticles) to form $P_xO_y$ species. This leads to pure precious metal nanoparticles stabilized by polyglycerol The oxygen containing oxidizing agent may be directly oxygen (pure oxygen or air comprising oxygen) or hydrogen peroxide, for example. Other oxidizing agents may be ozone, nitric acid, sulfuric acid, chlorine, chromic acid. Preferably hydrogen peroxide is used as hydrogen peroxide has the advantage that oxidation is performed rapidly (compared to pure oxygen). Before adding the oxygen containing oxidizing agent, the sedimented nanoparticles may be separated from the supernatant. The oxygen containing oxidizing agent may thus be added to the sediment.

The precious metal may be selected from the group comprising gold, palladium, platinum and silver.

The solution may be for example a precious metal chloride solution or a precious metal nitrate solution. The solution may have a pH at which the precious metal is present in the form of precious metal ions. For example, the pH may be in the range from 1,0 to 2,0. Furthermore, the black phosphorus - polyglycerol nanoparticles (black phosphorus nanoparticles) may be added to the solution such that the black phosphorus - polyglycerol nanoparticles (black phosphorus nanoparticles) have a concentration in the range from 0.05 mg/ml to 10 mg/ml. The concentration may be chosen in dependence of the amount of precious metal.

The invention is explained in more detail below by way of exemplary embodiments in connection with the drawings, in which:

fig. 1          schematically shows the steps of a mechanochemical process;

fig. 2          schematically shows a milling device used to perform the mechanochemical process of fig. 1;

fig. 3          shows the reaction equation to obtain black phosphorous nanoparticles;

fig. 4          shows Raman, $^{31}$P-MAS-NMR and PXRD spectra of red phosphorus and black phosphorus nanoparticles;

fig. 5          shows the reaction equation to obtain black phosphorous - polyglycerol nanoparticles;

fig. 6 and 7    show $^{1}$H-NMR spectra of black phosphorous - polyglycerol nanoparticles;

fig. 8          shows $^{31}$P-MAS-NMR spectra of black phosphorus nanoparticles and black phosphorous - polyglycerol nanoparticles;

fig. 9          shows Fourier-transform infrared (FT-IR) spectra of black phosphorus nanoparticles and black phosphorous - polyglycerol nanoparticles;

fig. 10         shows Raman spectra of black phosphorus nanoparticles and black phosphorous - polyglycerol nanoparticles;

fig. 11         shows X-ray photoelectron spectra (XPS) of black phosphorous - polyglycerol nanoparticles;

fig. 12         shows UV-Vis absorption spectra of black phosphorus nanoparticles and black phosphorous - polyglycerol nanoparticles;

fig. 13         shows a thermogravimetric analysis of black phosphorus nanoparticles and black phosphorous - polyglycerol nanoparticles;

fig. 14         shows the results of a photothermal response analysis of black phosphorus nanoparticles and black phosphorous - polyglycerol nanoparticles;

fig. 15         schematically shows the steps of a method for recovering a precious metal from a precious metal containing matrix according to the invention;

fig. 16         shows SEM images of black phosphorous - polyglycerol nanoparticles, black phosphorous nanoparticles with or without gold nanoparticles (Au$^0$) bound on their surfaces and of isolated gold nanoparticles (Au$^0$) after recovery;

fig. 17         shows the size distribution of the diameter of the gold nanoparticles (AuNP) derived from the method of fig. 15 using BP-PG, BP and BP@PG;

fig. 18         shows a UV-Vis absorption spectrum of gold nanoparticles (AuNP);

fig. 19         shows a solution of gold ions before and after treatment with black phosphorus nanoparticles and black phosphorous - polyglycerol nanoparticles using different concentration ratios;

fig. 20         shows a solution of palladium ions and a solution of platinum ions before and after treatment with black phosphorous - polyglycerol nanoparticles using different concentration ratios;

fig. 21         shows a cyclic voltammogram of a dispersion comprising metal ions and black phosphorous - polyglycerol nanoparticles; and

fig. 22        shows X-ray photoelectron spectra (XPS) of gold nanoparticles.

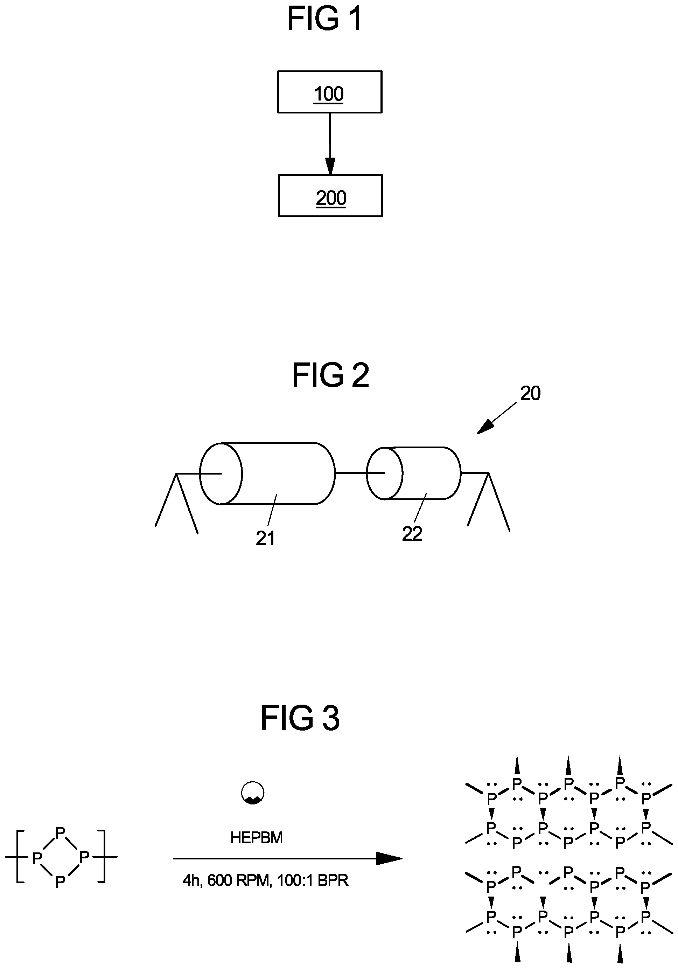

Figure 1 schematically shows the general steps of a mechanochemical process which underlies the method for synthesizing black phosphorus - polyglycerol (BP-PG) nanoparticles according to the invention and which is also used to obtain black phosphorous (BP) nanoparticles. The mechanochemical process includes generally a first step 100 of adding one or more compounds / chemical elements and a plurality of beads 10 to a chamber 21 of a milling device 20 and a second step 200 of rotating the chamber 21 over a defined period of time. The mechanochemical process is a solventless method, which is thus environmentally friendly and rapid.

Figure 2 schematically shows a milling device 20 used to perform the mechanochemical processes described herein. The milling device comprises a chamber 21 and a drive system 22. The chamber 21 is adapted to receive a plurality of beads 10 and one or more compounds / agents provided to undergo the mechanochemical processes. The chamber 21 is rotatably mounted and adapted to rotate about a rotation axis. The drive system 22 is adapted to rotate the chamber 21 about its rotation axis.

For synthesizing black phosphorus - polyglycerol (BP-PG) nanoparticles, black phosphorous (BP) nanoparticles are used. According to the invention, black phosphorous (BP) nanoparticles are obtained in a mechanochemical process. The reaction equation underlying the mechanochemical process is illustrated in Figure 3. Accordingly, in the first step 100, red phosphorus (RP) powder and stainless-steel beads 10 are added to the chamber 21 of the milling device 20. Preferably, the mass ratio of the beads 10 to red phosphorus (RP) powder should be relatively high. In this example, the mass ratio of the beads 10 to red phosphorus (RP) powder is 100:1. The chamber 21 is under argon to avoid undesired side reactions. Alternatively, the chamber 21 may be under nitrogen or any other inert gas (free of oxygen). In the second step 200, the chamber 21 is rotated for 4 hours at a rotation speed of 600 rpm (rounds per minute). In the second step 200, the red phosphorus (RP) powder undergoes allotropic conversion to black phosphorus (BP) nanoparticles. The black phosphorus (BP) nanoparticles are collected under argon. Alternatively, the black phosphorus (BP) nanoparticles may be collected under nitrogen or any other inert gas (free of oxygen). While red phosphorus has a total pore area, or specific surface area (SSA), of 2.7 $m^2$/g, the SSA of the black phosphorus nanoparticles is 8.4 $m^2$/g (mercury porosimetry measurements). Such a substantial SSA is beneficial for applications that rely on surface interactions. as more surface area is available for these interactions. Moreover, the average pore diameter of the black phosphorus nanoparticles (BP) is 0.366 $\mu$m, while that of red phosphorus is 1.03 $\mu$m.

Other methods to obtain black phosphorus nanoparticles, may be used. One alternative method uses chemical vapor transport (CVT), another alternative method employs solvothermal synthesis (STS).

The CVT method may be performed by sealing red phosphorus together with a small amount of mineralizers (such as tin and tin(IV) iodide or lead and lead(IV) iodide) in a quartz ampule and by heating the ampule to 650 °C in a tube/muffle furnace. Then it is cooled down slowly to obtain black phosphorus (BP (CVT)) in crystal form. The formed crystals are crushed mechanically and then subjected to an ultrasonic treatment in a solvent (such as N-Methyl-2-pyrrolidone) to obtain black phosphorus nanoparticles. A precise description is given in the annex "experimental details".

The solvothermal synthesis (STS) may be performed by sealing red phosphorus (RP) immersed in ethylenediamine in a Teflon bomb and by heating it to approximately 200 °C for a relatively long period of time to obtain black phosphorus (BP (STS)) in powder form. A precise description is given in the annex "experimental details".

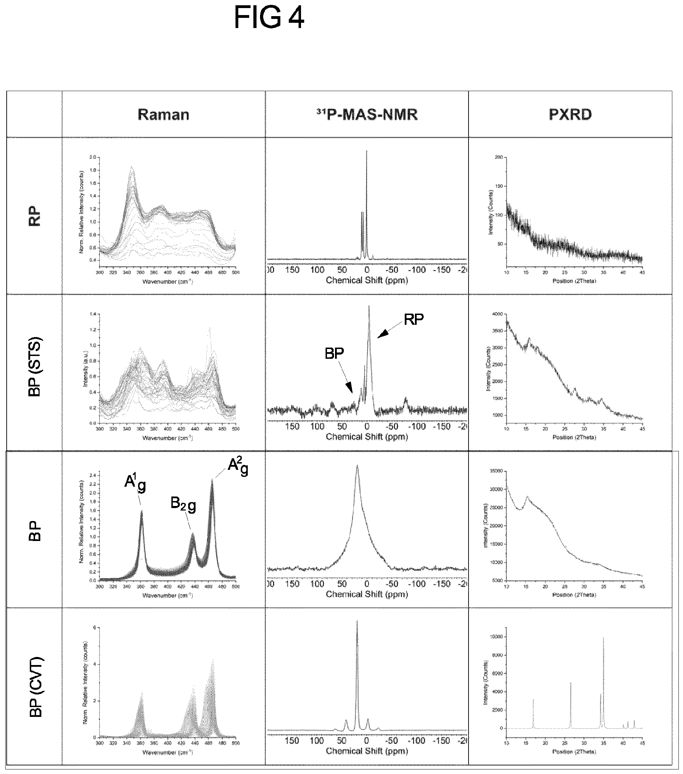

To show the benefits of the black phosphorus (BP) obtained in the mechanochemical process (Figure 3) over black phosphorus obtained via CVT and STS, also the alternative methods have been performed. The produced black phosphorus nanoparticles are characterized using Raman spectroscopy, Phosphorus Magic-Angle Spinning Solid-State Nuclear Magnetic Resonance Spectroscopy ($^{31}$P-MAS-NMR) and Powder X-Ray Diffraction (PXRD). The spectra are shown in Figure 4 for comparison of the different black phosphorus products BP, BP (STS) and BP (CVT). In Figure 4, also the spectra of red phosphorus (RP) are shown as a reference point at the beginning of each method/process.

The Raman map (collection of spatially resolved Raman spectra) of the formed black phosphorus (BP) nanoparticles using the mechanochemical process (third line in Figure 4) shows an effective allotropic conversion mainly seen by the pronounced evolution of the $B_{2g}$ (435 cm$^{-1}$) and the $A_g^2$ (463 cm$^{-1}$) black phosphorus vibrational peaks, the strong depletion of the broad band between 368 cm$^{-1}$ and 425 cm$^{-1}$ and the blue shift of the $B_1$ (350 cm$^{-1}$) red phosphorus

peak to the $A_g^1$ (360 cm$^{-1}$) black phosphorus peak. The narrow width of the peaks and the distribution of the black phosphorus (BP) Raman vibrational bands indicate a high allotropic conversion leading to evenly sized black phosphorus (BP) nanoparticles.

The Raman map of black phosphorus (BP (CVT)) obtained via CVT (fourth line in Figure 4) is very similar to that of the black phosphorus (BP) nanoparticles formed in the mechanochemical process (third line in Figure 4), indicative of a high allotropic conversion too. However, the Raman vibrational bands are less narrow which may result from an amorphous structure.

In contrast, these vibrational features from black phosphorus (BP (STS)) obtained via STS (second line in Figure 4) are not clearly indicated (even after heating at 170 °C). The broad distribution of Raman vibrational bands is a result of a low allotropic conversion, mostly on the surface of the red phosphorus (RP) particles. The partial conversion is attributed to a hindered access of ethylenediamine to the inner core of the red phosphorus (RP) particles. This finding is supported by the $^{31}$P-MAS-NMR spectrum of the black phosphorus (BP (STS)) showing a heterostructure of red and black phosphorus (second line in Figure 4).

The $^{31}$P-MAS-NMR spectrum of the black phosphorus (BP) nanoparticles formed in the mechanochemical process (third line in Figure 4) shows a clear single broad signal at approximately 19.0 ppm indicating amorphous black phosphorus (BP). The amorphous nanoparticle morphology of the produced black phosphorus (BP) nanoparticles resulting from the mechanochemical process is also expressed by the lack of diffraction patterns in the PXRD spectrum. For comparison, black phosphorus (BP (CVT)) obtained via CVT (fourth line in Figure 4, spectrum taken from ICSD crystallographic database (Dominique Laniel, Bjoern Winkler, Timofey Fedotenko, Anna Pakhomova, Stella Chariton, Victor Milman, Vitali Prakapenka, Leonid Dubrovinsky, Natalia Dubrovinskaia CCDC 1986002: Experimental Crystal Structure Determination, 2021, DOI: 10.5517/ccdc.csd.cc24nII0 and Zagorac, D., Müller, H., Ruehl, S., Zagorac, J. & Rehme, S., J. Appl. Cryst. 52 (2019), 918-925; DOI: 10.1107/S160057671900997X)) shows clear diffraction patterns resulting from the layered crystal structure. The amorphous morphology represents a high surface area and is advantageous for applications as reducing agent.

The spectra in Figure 4 show the high quality of the black phosphorus (BP) nanoparticles produced in the mechanochemical process which is a rapid, simple and environmentally friendly approach.

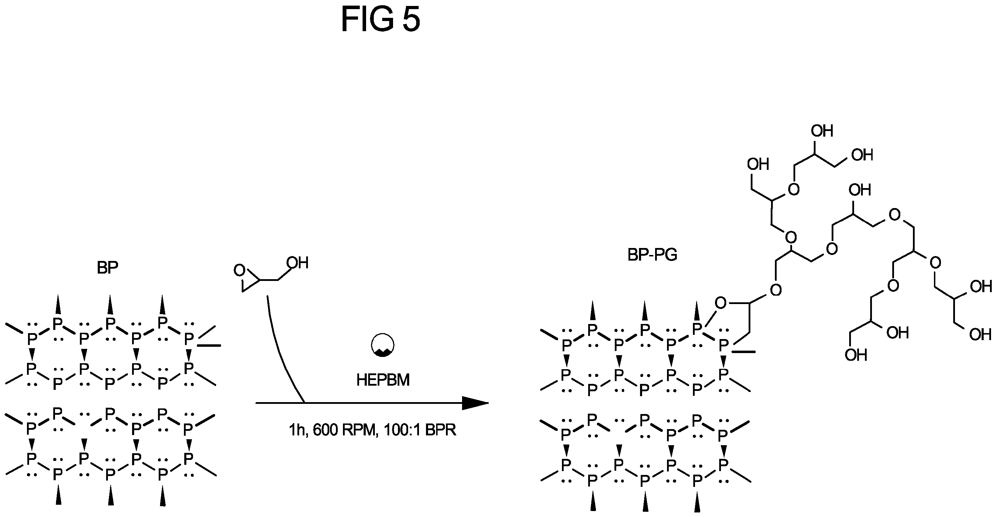

Due to their high quality, the black phosphorus (BP) nanoparticles produced in the mechanochemical process are used to synthesize black phosphorus - polyglycerol (BP-PG) nanoparticles. According to the invention, black phosphorous - polyglycerol (BP-PG) nanoparticles are obtained in a mechanochemical process. The reaction equation underlying the mechanochemical process is illustrated in Figure 5. Accordingly, in the first step 100 black phosphorus (BP) nanoparticles, glycidol ($C_3H_6O_2$) and stainless-steel beads 10 are added to the chamber 21 of the milling device 20. The chamber 21 may be the same as the one used for mechanochemically obtaining black phosphorous (BP) nanoparticles. The produced black phosphorous (BP) nanoparticles may remain in the chamber 21, and the amount of beads 10 may be adjusted. The synthesis of the black phosphorus - polyglycerol (BP-PG) nanoparticles may thus be a two-step-process performed in a single recipient (chamber 21). The mass ratio of the black phosphorus (BP) nanoparticles and the glycidol is 1:1. The mass ratio of the beads 10 on the one hand and the black phosphorus (BP) nanoparticles and the glycidol on the other hand is 100:1. The chamber 21 is under argon (or nitrogen or any inert atmosphere) to avoid undesired side reactions. In the second step 200, the chamber 21 is rotated for 1 hour at a rotation speed of 600 rpm (rounds per minute). In the second step 200, the glycidol undergoes an anion ring opening polymerization to polyglycerol and functionalizes the black phosphorus (BP) nanoparticles. The black phosphorus - polyglycerol (BP-PG) nanoparticles are collected under argon to allow for a long-term storage. Instead of argon, nitrogen or any inert atmosphere can be used.

For comparison purposes, black phosphorus - polyglycerol nanoparticles have been synthesized using an alternative, solvent-based method. In this alternative method, black phosphorus (BP) nanoparticles (also synthesized mechanochemically) and glycidol in a mass ratio of 1:1 were dispersed in N-methyl-2-pyrrolidone (NMP) and treated at 120 °C for 72 hours under inert atmosphere before purification of the nanoparticles. The finally obtained product shall be designated BP@PG here, in order to clearly distinguish it from the black phosphorus - polyglycerol (BP-PG) nanoparticles prepared using the mechanochemical approach according to the invention. The solvent-based method has a rather low yield, is lengthy (also due to costly purification times), complex, and uses toxic organic solvents.

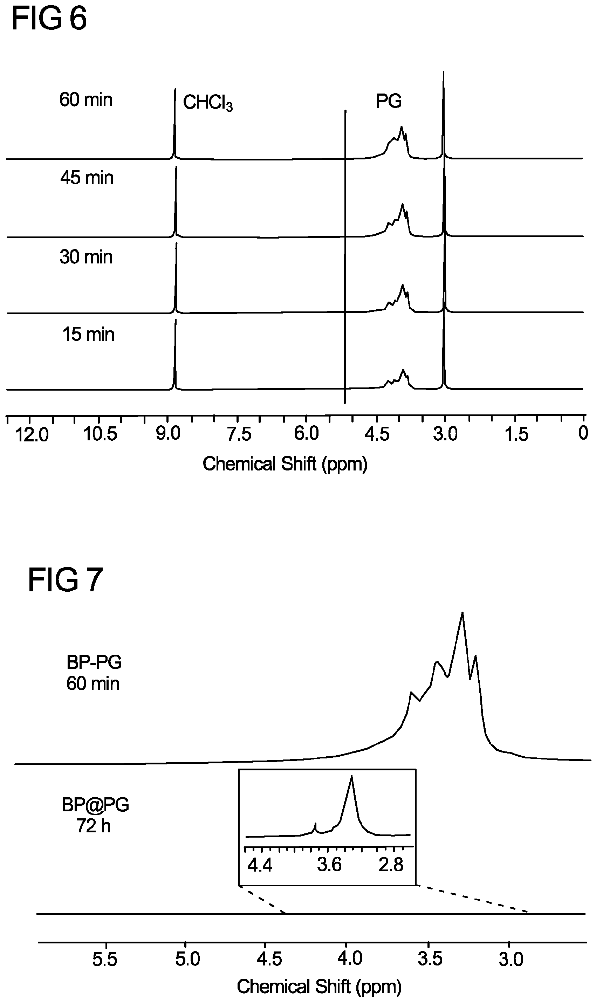

Figure 6 shows $^1$H-NMR spectra of black phosphorus - polyglycerol (BP-PG) nanoparticles after 15 min, 30 min, 45 min and 60 min of the rotation step 200 of the mechanochemical process. It can be seen that a multiplet between 3.4 and 4.0 ppm resulting from polyglycerol develops already after 15 minutes, indicating the successful polymerization of glycidol. For comparison, Figure 7 shows only a very weak signal in an $^1$H-NMR spectrum of BP@PG after 72 hours of heating. The upper spectrum in Figure 7 shows the black phosphorus - polyglycerol (BP-PG) nanoparticles after 60 min of the rotation step 200. The $^1$H-NMR spectra in Figures 6 and 7 have been taken using BP-PG and BP@PG in DMSO-d6 and have been normalized to a signal representing a known amount of added $CHCl_3$.

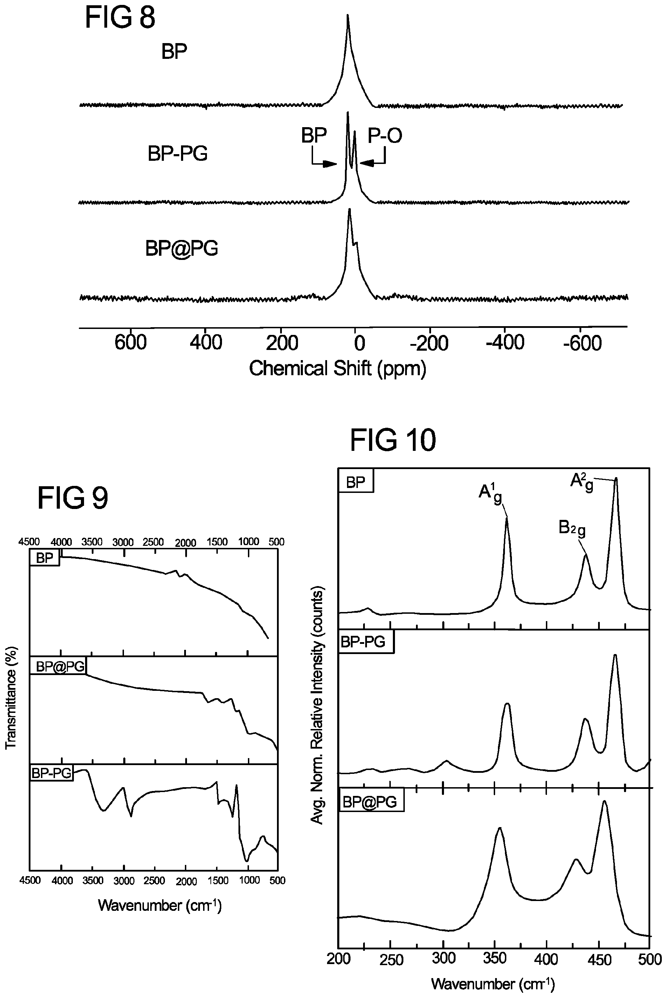

Figure 8 shows $^{31}$P-MAS-NMR spectra of black phosphorus (BP) nanoparticles, black phosphorus - polyglycerol (BP-PG) nanoparticles and black phosphorous - polyglycerol (BP@PG) nanoparticles. The signal at 0.0 ppm in the spectrum of BP-PG is indicative of P-O bonds arising from a high-degree of functionalization of black phosphorus by glycidol monomers which polymerized onto black phosphorus nanoparticles. BP@PG, however, has a very broad signal between 0.0 and -10.0 ppm indicating that it was much less functionalized than BP-PG and indicating $P_xO_y$ species, but no clear single peak representing a homogeneous P-O bond from functionalization with polyglycerol. The broad signal results from oxidation during the purification process. In BP@PG the black phosphorus nanoparticles are encapsulated by the polyglycerol which can limit its interaction with the environment and reduce its performance in interfacial applications. For comparison, also the signal of black phosphorus (BP) at approximately 19.0 ppm is shown.

Fourier-transform infrared (FT-IR) spectra shown in Figure 9 reveal intense signals for BP-PG at 1240 cm$^{-1}$ and 978 cm$^{-1}$ corresponding to the P-O-C asymmetric and symmetric stretches, respectively, as well as all characteristic polyglycerol stretches for the O-H bonds (3000-3600 cm$^{-1}$), C-H bonds (2877 cm$^{-1}$) and C-O-C bonds (1045 cm$^{-1}$). These signals are not present for BP@PG. For comparison, also the FT-IR spectrum of black phosphorus (BP) is shown. The spectra of Figure 9 confirm that in BP@PG functionalization of BP with PG is significantly less pronounced that in BP-PG and that BP-PG shows characteristics of polyglycerol.

The Raman spectra in Figure 10 show that the Raman vibrational bands for BP@PG are attenuated in comparison to BP and BP-PG as seen by the broadness of the $A_g^1$, $B_{2g}$, $A_g^2$ peaks. Figure 10 shows that BP-PG shows characteristics of BP.

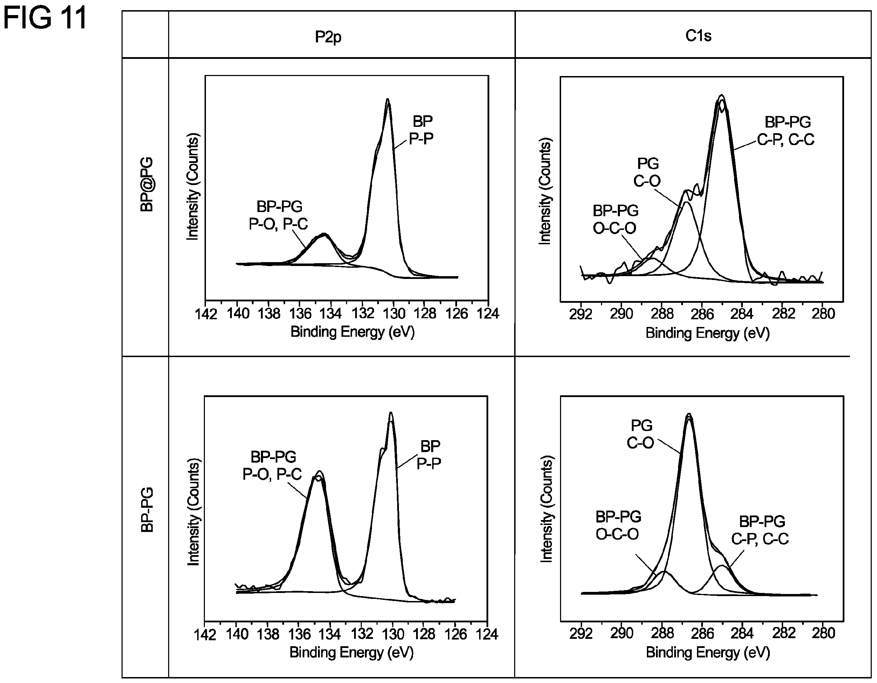

Figure 11 shows X-ray photoelectron spectra (XPS) of black phosphorus (BP) nanoparticles, black phosphorus - polyglycerol (BP-PG) nanoparticles and black phosphorus - polyglycerol (BP@PG) nanoparticles. The X-ray photoelectron P2p spectrum of BP-PG indicates the presence of P-P bonds from the BP component at 130-131 eV and P-O and P-C bonds from the BP-PG covalent functionalization at 134-135 eV. The X-ray photoelectron C1s spectrum of BP-PG indicated C-O bonds mainly from the PG component at 286 eV and C-P and O-C-O bonds from the BP-PG covalent functionalization at 284 eV and 287 eV, respectively. On the other hand, XPS analysis of BP@PG reveal functionalization to a lesser degree than BP-PG indicated by the smaller P-O and P-C peak in the P2p spectrum, and a smaller C-O peak in the C1s spectrum. Since XPS is a surface analytical technique with a detection limit of approximately 10.0 nm in depth, no P-P signal from intact black phosphorus could be detected, but only the oxidized/degraded surface is analyzed. A comparatively homogeneous distribution of black phosphorus and polyglycerol in BP-PG is indicated by the prominent existence of signals from its components, strongly suggesting the formation of a true nanohybrid material coalescing a solid inorganic nanomaterial with a liquid organic nanomaterial. BP-PG thus retains the desirable properties of both black phosphorus and polyglycerol.

Zeta potential (ZP) measurements of BP, BP-PG and BP@PG reveal a negative charge of -43.5 mV for BP and of -39.4 mV for BP-PG. This negative charge is mainly provided by the lone pairs of electrons of the phosphorus atoms of black phosphorus. However, for BP@PG the negative charge is only -25.2 mV. The reduced negative charge can lead to aggregation of the nanoparticles as the negative repulsive forces are not strong enough to keep the nanoparticles dispersed in aqueous environments. However, a high concentration of BP on the nanoparticle surface (such as in BP-PG) improves its capability to interact with (precious metal) ions and is thus advantageous for acting as reducing agent. Dynamic light scattering (DLS) analysis of BP, BP-PG and BP@PG reveals a diameter of 344 nm for BP@PG (resulting from aggregation) as compared to a diameter of 208 nm for BP-PG and a diameter of 242 nm for BP.

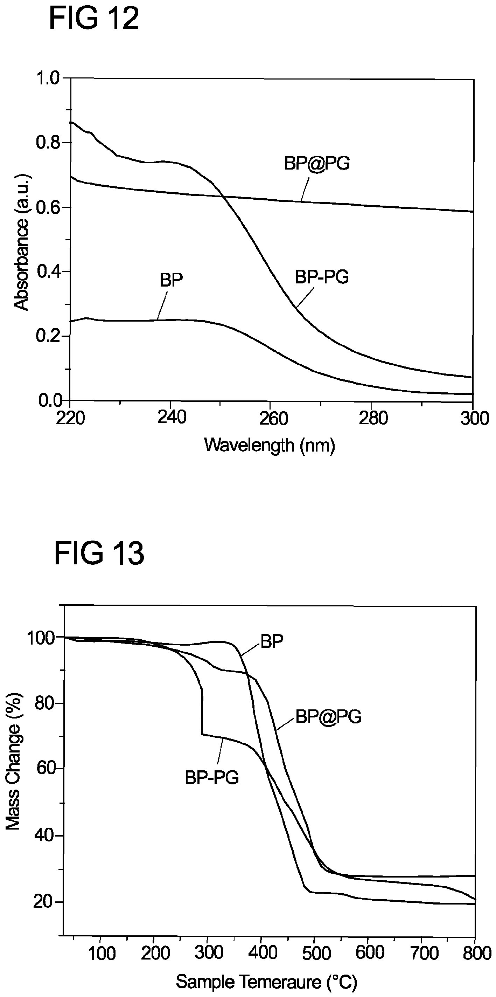

To investigate the dispersibility of the BP, BP-PG and BP@PG nanomaterials in aqueous systems, UV-Vis absorption spectra have been recorded 15 min after dispersion of the nanomaterials in water (concentration 100 μg/ml). Figure 12 shows the UV-Vis absorption spectra. Accordingly, both BP-PG and BP@PG have a more pronounced absorbance and thus reveal higher dispersibility as compared to bare BP. The higher dispersibility of BP-PG (indicated by the higher absorbance) in aqueous environments compared to BP@PG is owed to the greater incorporation of the hydrophilic polyglycerol component into the black phosphorus component. This is confirmed by a thermogravimetric analysis (TGA) analysing the change of the mass of a sample in dependence of its temperature (Figure 13). The abrupt mass reduction of BP-PG at approximately 300°C results from evaporation of the polyglycerol.

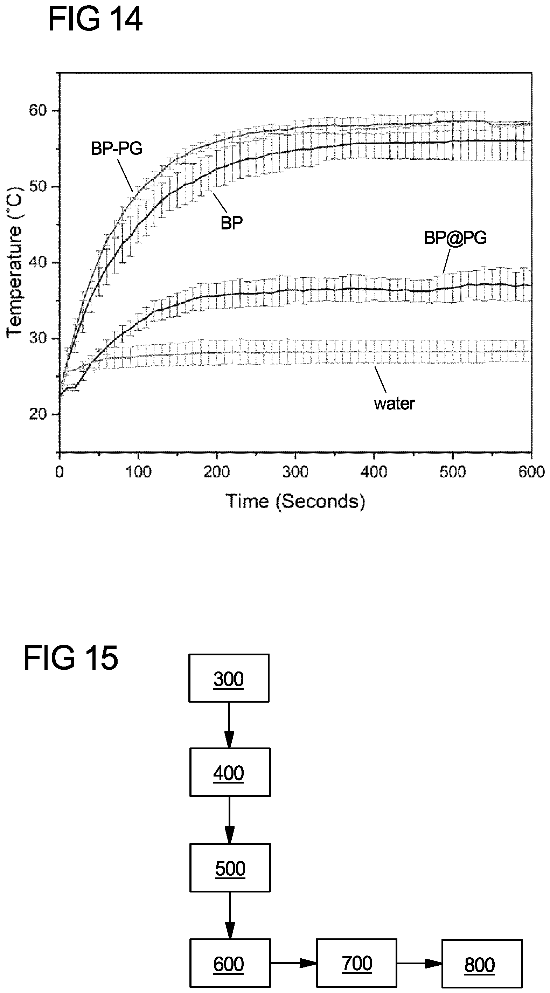

Figure 14 shows the photothermal response of BP, BP-PG and BP@PG (and for reference purposes also of water) to near-infrared (NIR) radiation. In comparison to water, BP heats up significantly upon radiation. Aqueous dispersions of BP, BP-PG and BP@PG have been irradiated for 10 minutes using a NIR laser. The temperature was measured using a forward-looking infrared (FLIR) camera. BP-PG reached a temperature of 58.3 °C (close to that of BP), whereas BP@PG reached a temperature of only 37.0 °C. The results of Figures 12 to 14 suggest that BP-PG combines the features of black phosphorus and of polyglycerol. In comparison to BP@PG the hybridity of properties is particularly pronounced in BP-PG.

Regarding production time, the mechanochemical approach can achieve both rapid allotropic conversion of red phosphorus to black phosphorus and functionalization of black phosphorus nanoparticles with polyglycerol via anion ring opening polymerization of glycidol. BP-PG is a material that is synthesized in a solventless mechanochemical method. The starting materials red phosphorus and glycidol are cheap. In total, the synthesis of BP-PG is environmentally friendly and not expensive. BP-PG is a highly hydrophilic nanomaterial that is ideal for aqueous environments. Due to its homogeneous, amorphous architecture, its high surface area and its nanohybrid properties presented in the various spectra (Figures 6-14), the performance of black phosphorus - polyglycerol (BP-PG) nanoparticles synthesized mechanochemically for recovering a precious metal from a precious metal containing matrix has been investigated.

Figure 15 schematically shows the steps of a method for recovering a precious metal from a precious metal containing matrix. Step i (300) consists in providing a precious metal containing matrix in the form of a solution. In the solution the precious metal is present as dissolved precious metal ions. For example, here the precious metal is gold (Au). In step ii (400) mechanochemically prepared black phosphorus - polyglycerol (BP-PG) nanoparticles are added to the solution. The solution charged with the black phosphorus - polyglycerol (BP-PG) nanoparticles is stirred in step iii (500). During step iii (500) the black phosphorus - polyglycerol (BP-PG) nanoparticles act as reducing agent causing an electron transfer from the black phosphorus - polyglycerol (BP-PG) nanoparticles to the precious metal ions which are reduced to zero-valent solids that precipitate as precious metal nanoparticles out of solution. After stirring, the solution is left to rest to allow sedimentation of the black phosphorus - polyglycerol nanoparticles charged with the precious metal nanoparticles (step iv (600)). The precious metal nanoparticles are polymer stabilized and have a mesodisperse structure. (Mesodisperse means between monodisperse and polydisperse.) The thus formed sediment and supernatant are separated from one another in step v (700). The sediment is then (step vi (800)) subjected to oxidation by adding an oxygen containing oxidizing agent to the sediment in order to recover the precious metal nanoparticles from the black phosphorus - polyglycerol nanoparticles charged with the precious metal nanoparticles.

The precious metal ion solution (provided in step i) is for example a precious metal chloride or precious metal nitrate solution. To simulate an electronic waste leachate, the precious metal ion solution contains chromium ($Cr^{3+}$), copper ($Cu^{2+}$), iron ($Fe^{3+}$), zinc ($Zn^{2+}$), nickel ($Ni^{2+}$) and gold ($Au^{3+}$) ions which are most found in electronic waste leachate. The solution has a pH of 1.0. The concentration of the precious metal in solution is 5 mM (5 mmol/l). In step ii (400) the black phosphorus - polyglycerol nanoparticles are added to the solution to reach a concentration of 1 mg/ml. Stirring 500 (step iii) is performed for 30 minutes. Also sedimentation 600 (step iv) is performed for 30 minutes. For the oxidation step 800 (step vi) the oxidizing agent can be oxygen (present in the ambient air) or hydrogen peroxide ($H_2O_2$) (for example 30 % wt. in water). Oxidation with hydrogen peroxide ($H_2O_2$) occurs spontaneously, while oxidation in ambient air can take up to a week (depending on oxygenation levels). Hydrogen peroxide ($H_2O_2$) allows a controlled oxidation. In the oxidation step, $P_xO_y$ species are formed and the precious metal nanoparticles are released. (In the case of gold as precious metal, a pink-red dispersion of gold nanoparticles is formed.) In this process, black phosphorus is transformed into environmentally benign chemical species, mitigating long-term environmental impact.

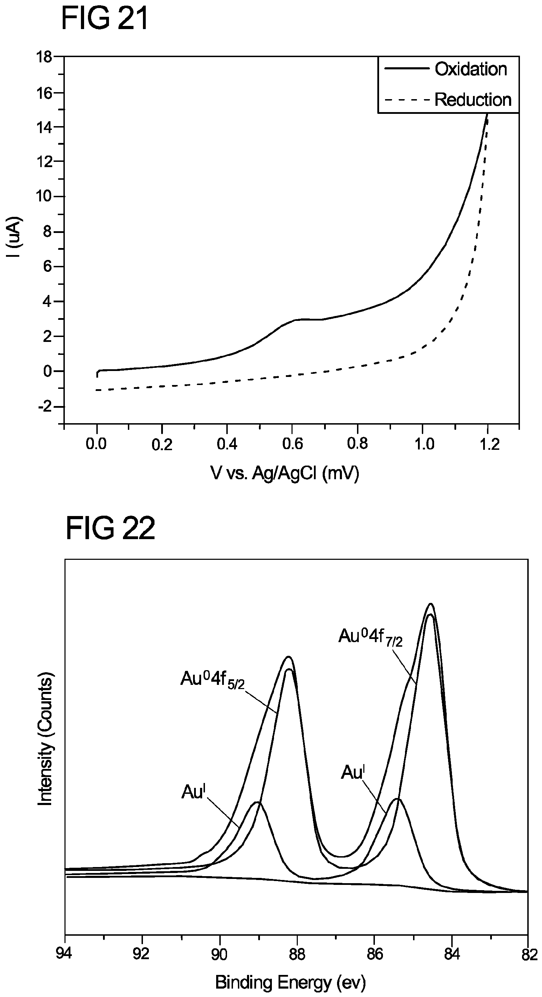

To gain a mechanistic insight into the interaction between BP-PG and these metals, a cyclic voltammogram (CV) of a BP-PG dispersion was performed, which is shown in Figure 21. The cyclic voltammogram reveals a peak at +630.4 mV vs. Ag/AgCl (corresponding to +835.4 mV vs. standard hydrogen electrode (SHE)) indicative of an irreversible oxidation of the phosphorus component from $P^0$ to $P^{3+}$ and $P^{5+}$, which are finally converted into $H_3PO_4$. As the reduction potential of $AuCl_4^-$ to zero-valent $Au^0$ is +1002 mV vs. SHE, which is higher than that of BP-PG (+835 mV vs. SHE), an electron transfer from BP-PG to $AuCl_4^-$ can occur spontaneously without the need of external energy/activation. On the other hand, all other metal ions ($Cu^{2+}$, $Fe^{3+}$, $Ni^{2+}$, $Zn^{2+}$, $Cr^{3+}$) have a reduction potential lower than that of BP-PG, so that such electron transfer from BP-PG to the other metal ions does not occur. An interaction between BP-PG and $AuCl_4^-$ leads to the formation of the redox pair BP-PG/$AuCl_4^-$, where the BP-PG reduces the Au cation to the zero-valent state, thereby oxidizing the BP component of BP-PG.

For comparison purposes, the method outlined in Figure 15 was performed using BP-PG synthesized in the mechanochemical process according to the invention, using BP@PG synthesized with the solvent-based method, using mechanochemically prepared black phosphorus (BP) and using BP (CVT). Both, BP-PG and BP@PG were obtained using mechanochemically prepared black phosphorus (BP).

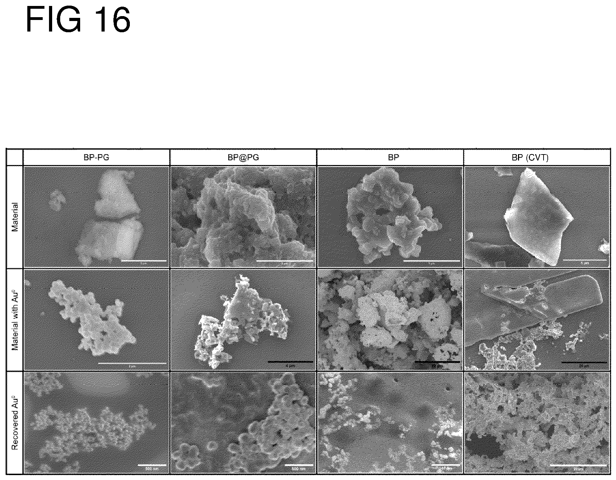

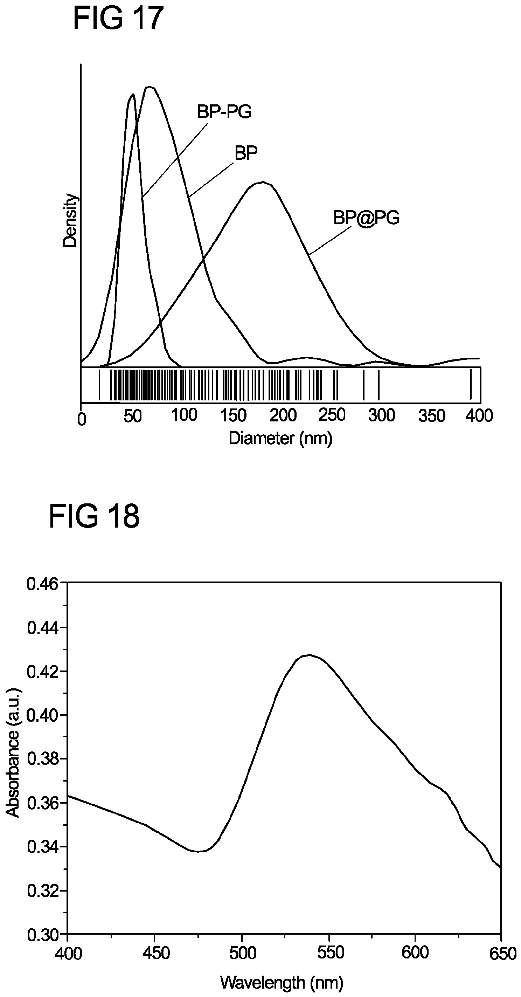

The sediment was investigated by scanning electron microscopy (SEM). Figure 16 shows SEM images of BP-PG, BP@PG, BP and BP (CVT), of gold nanoparticles ($Au^0$) on the surface of BP-PG, BP@PG, BP and BP (CVT) and of gold nanoparticles ($Au^0$) derived from the method of Figure 15 using BP-PG, BP@PG, BP and BP (CVT). Figure 17 shows the size distribution of the diameter of the gold nanoparticles derived from the method of Figure 15 using BP-PG, BP or BP@PG.

According to the SEM images, the gold nanoparticles (AuNP) derived from the method of Figure 15 using BP-PG are mesodisperse with a size of approximately 50 nm. In contrast, the SEM images of the gold nanoparticles (AuNP) produced by the method of Figure 15 using BP and BP@PG suggest a non-uniform distribution of morphologies, possibly resulting from an agglomeration of BP and BP@PG nanoparticles in aqueous environments, and with respect to BP@PG due to a non-uniform distribution of the BP component and the PG component (low concentration of BP on the surface and high concentration of PG on the surface). This implies that the homogeneous architecture and the polymer-stabilization of BP-PG is favorable for the formation of spherical mesodisperse gold nanoparticles which could be stabilized by the polyglycerol component. While the black phosphorus component serves as a gold (precious metal) reducing agent, the polyglycerol component stabilizes the gold (precious metal) nanoparticles and serves as hydrophilic component ensuring uniform distribution of the nanoparticles and preventing aggregation.

Figure 18 shows a UV-Vis absorption spectrum of a dispersion at the end of the method of Figure 15 using BP-PG. The absorption signal at approximately 537 nm is characteristic of gold nanoparticles. The presence of gold nanoparticles has also been confirmed by high resolution Au 4f XPS spectroscopy showing zero-valent $Au^0$ species and a small amount of $Au^I$ species (Figure 22).

The recovery efficiency was investigated by subjecting the supernatant to atomic absorption spectroscopy (AAS). AAS shows that from the ion mixture comprising chromium ($Cr^{3+}$), copper ($Cu^{2+}$), iron ($Fe^{3+}$), zinc ($Zn^{2+}$), nickel ($Ni^{2+}$) and gold ($Au^{3+}$) ions, only gold ($Au^{3+}$) ions were reduced by BP-PG. AAS also shows that BP-PG and BP are able to reduce gold ions in solution more than 3 times their weight. The high dispersibility of BP-PG owed to the hydrophilic polyglycerol component causes uniform distribution of the nanomaterial in aqueous environments. In contrast, BP tends to agglomerate in such systems, reducing its dispersibility and limiting its interactions with gold ions. The BP component in BP and BP-PG is amorphous in structure and therefore has a large surface area which improves its capability to interact with (precious metal) ions and is thus advantageous for acting as reducing agent. For comparison, the efficiency of BP (CVT), BP@PG and activated carbon (AC) to recover gold from the ion mixture comprising chromium ($Cr^{3+}$), copper ($Cu^{2+}$), iron ($Fe^{3+}$), zinc ($Zn^{2+}$), nickel ($Ni^{2+}$) and gold ($Au^{3+}$) ions was also investigated. Accordingly, BP@PG is able to reduce gold ions in solution about 2 times its weight, BP (CVT) about its weight and AC less than its weight. The poor efficiency of BP (CVT) is attributed to its tightly stacked crystalline structure. The amorphous structure of BP in BP-PG and BP@PG contributes to an increased surface area which is beneficial for surface interactions leading to a higher recovery efficiency than BP (CVT).

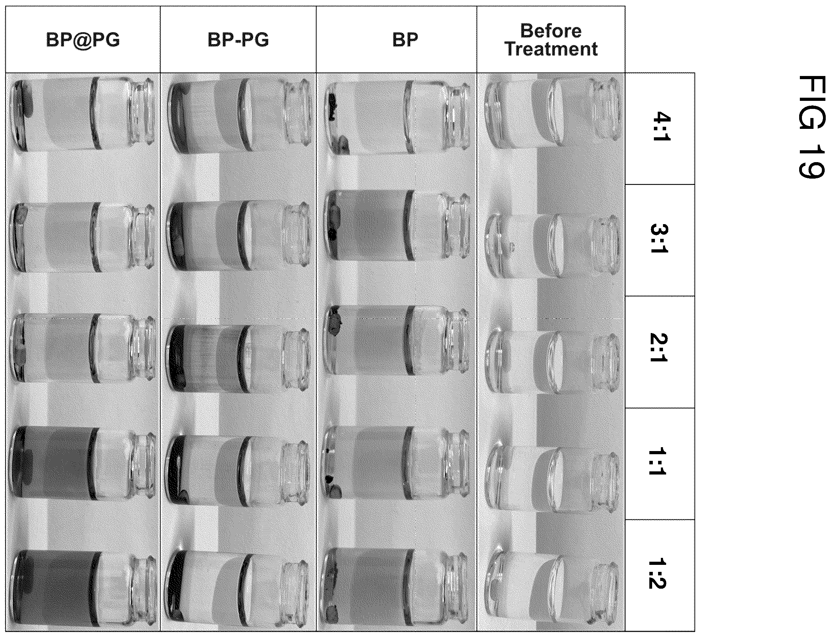

Figure 19 shows photos of vials filled with the ion solution (before treatment) and with the ion solution and one of BP, BP-PG and BP@PG. Here the mass ratio of the gold ($Au^{3+}$) ions to BP, BP-PG and BP@PG, respectively, is (from left to right) 4:1, 3:1, 2:1, 1:1 and 1:2. The photos show that BP nanoparticles and to some extent also BP@PG nanoparticles tend to agglomerate while BP-PG nanoparticles are well dispersed.

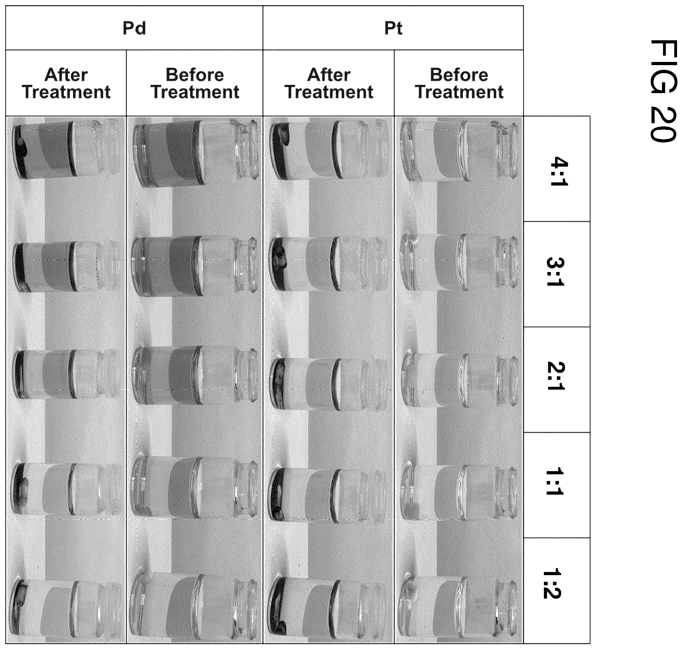

The method of Figure 15 has also been performed using a precious metal ion solution containing chromium ($Cr^{3+}$), copper ($Cu^{2+}$), iron ($Fe^{3+}$), zinc ($Zn^{2+}$), nickel ($Ni^{2+}$) and instead of gold ($Au^{3+}$) ions one of palladium ($Pd^{2+}$) and platinum ($Pt^{4+}$) ions. UV-Vis spectra of palladium(II) chloride and hexachloroplatinic acid before and after treatment with BP-PG have been recorded. They hint to an interaction of BP-PG with $Pd^{2+}$ and $Pt^{4+}$, respectively. The reduction potential of $Pd^{2+}$ (951 mV vs. SHE) is higher than that of BP-PG (835 mV vs. SHE), allowing the formation of the BP-PG/$Pd^{2+}$ redox pair. The reduction potentials of $[PtCl_6]^{2-}$ and $[PtCl_4]^{2-}$ (680 mV and 755 mV vs. SHE, respectively) are slightly lower than that of BP-PG. Therefore, Pt ions rather seem to adsorb onto BP-PG. A stronger interaction seems to take place between $Pd^{2+}$ ions and BP-PG than between $Pt^{4+}$ ions and BP-PG. Figure 20 shows photos of vials filled with the palladium ($Pd^{2+}$) or platinum ($Pt^{4+}$) ion solution (before treatment) and with the ion solution and BP-PG. Here the mass ratio of the palladium ($Pd^{2+}$) or platinum ($Pt^{4+}$) ions to BP-PG is (from left to right) 4:1, 3:1, 2:1, 1:1 and 1:2. The photos show that the transparency of the solutions is increased after treatment.

Mechanochemically produced BP-PG shows benefits in terms of synthesis, hybridity of properties, environmental-friendliness, production costs and due to its high surface area its performance in recovering gold, palladium and platinum in the form of nanoparticles from an ionic mixture of metals additionally comprising chromium ($Cr^{3+}$), copper ($Cu^{2+}$), iron ($Fe^{3+}$), zinc ($Zn^{2+}$), nickel ($Ni^{2+}$) ions. In BP-PG, the high degree of BP (in combination with the high surface area) leads to a high precious metal recovery capacity, while the high degree of PG leads to stabilization of the precious metal nanoparticles. Its physicochemical properties also facilitate separation from aqueous dispersions.

The gold (precious metal) nanoparticles have a high surface area to volume ratio, enhancing their reactivity and efficiency in catalytic processes, their utility in targeted drug delivery systems in medical applications and their conductive properties in electronic components. The gold (precious metal) nanoparticles are stabilized mesodisperse nanoparticles which due to their physicochemical properties enable (compared to bulk gold (precious metal)) advanced applications in electronics, medicine, and catalysis.

## Experimental details

Materials

Red phosphorus (99.7 % purity) was obtained as a powder from Merck and was used without further purification or processing. Glycidol ($\geq$ 96.0 %, SigmaAldrich) underwent distillation before use and was stored at 4°C over molecular sieves and under an argon atmosphere to maintain inert conditions. Anhydrous N-methyl-2-pyrrolidone (NMP, with a purity of 99.5%, SigmaAldrich) was used without any additional purification. Argon and nitrogen gas were used to maintain inert conditions for all air-sensitive experiments. Iron (10.0 g/l, in 2.0 % HNOs, *Trace*CERT®) and zinc (1.0 g/l, in 2.0 % HNOs, *Trace*CERT®) standard solutions for AAS were obtained from SigmaAldrich. Copper, nickel, and chromium (all 1.0 g/l, in 2.0 % HNOs, ROTI®Star) standard solutions for AAS were obtained from Carl Roth GmbH. Gold (1.0 g/l, in 2.0 % HCl, ROTI®Star) standard solution for AAS was obtained from Carl Roth GmbH. Gold(III) chloride (solid powder, 99.0 %) was obtained from ABCR GmbH. Palladium(II) chloride (solid powder, $\geq$ 99.0 %) was obtained from Merck. Chloroplatinic acid hexahydrate (solid powder, $\geq$ 99.95 %), copper(II) chloride dihydrate (solid powder, $\geq$ 99.0 %), chromium(III) chloride hexahydrate (solid powder, $\geq$ 98.0 %), and nickel(II) chloride hexahydrate (solid powder, $\geq$ 98.0 %) were obtained from SigmaAldrich. Iron(III) chloride (solid powder, 98.0 %) was obtained from Riedel de Haën (Honeywell International Inc). Zinc(II) chloride (solid powder, $\geq$ 98.0 %) was obtained from Alfa Aesar GmbH (Thermo Fisher Scientific). Ultra-high purity synthetic-grade water was acquired from the Milli-Q® Advantage A10 Water Purification System. All additional chemicals and reagents were obtained from various commercial suppliers and used as-is without additional purification, unless specified otherwise.

Synthesis of BP

BP was prepared via HEPBM (high energy planetary ball milling) using the Pulverisette 6 ball-mill device from Fritsch GmbH. 1 g of red phosphorus was placed in an 80 ml stainless-steel ball-mill chamber together with 100 g of stainless-steel ball-mill medium (100:1 ball-to-powder mass ratio) under argon. The red phosphorus was milled at 600 rounds per minute (rpm) for a total of 4 hours before collecting the BP product under argon.

Synthesis of BP (STS)

BP (STS) was prepared solvothermally from red phosphorus and ethylenediamine. 150 mg of red phosphorus was immersed in 10 ml of anhydrous ethylenediamine under argon. The dry mixture was placed in a solvothermal autoclave reactor which comprises a polytetrafluoroethylene (PTFE) chamber jacketed by a steel autoclave. The reactor was then placed in an oven and heated at 200 °C for 7 days before letting it cool down to room temperature. The reactor was transferred back to an argon glovebox and the solvent was extracted (removed) by decanting. The BP (STS) powder was then washed with methanol 4 times via centrifugation before lyophilizing it to remove the solvent.

Synthesis of BP (CVT)

BP (CVT) was prepared via chemical vapor transport (CVT) from red phosphorus, tin, and tin(II) iodide. 500 mg of red phosphorus was placed in a glass ampule together with 4 mg of tin powder and 8 mg of tin(II) iodide under argon and sealed with a flame. The ampule was then placed in a muffle furnace before heating it to 650 °C over one hour. The temperature of the furnace was first reduced to 550 °C over 1 hour, then to 500 °C over 8 hours, and then to 200 °C over 4 hours, before turning off the heating and letting the ampule cool down to room temperature. The ampule was then transferred to a glovebox and opened to extract BP (CVT) crystals. The crystals were then crushed manually using a mortar and pestle before immersing them in anhydrous N-Methyl-2-pyrrolidon (NMP) (5 mg/ml) and subjecting them to ultrasonication for 4 hours under argon. The sonicated dispersion was then centrifuged at 1500 rounds per minue (rpm) for 45 min and the supernatant was extracted to collect the BP (CVT) nanoflakes and separate them from bulk BP. The supernatant was then flushed with argon and stored at 4 °C for further use. Yield: 20-30 %, 1 mg/ml

Synthesis of BP-PG

BP-PG was prepared mechanochemically via HEPBM using the Pulverisette 6 ball-mill device from Fritsch GmbH. 500 mg of previously prepared BP and 500 mg of anhydrous distilled glycidol were placed in a stainless-steel ball-mill chamber together with 100 g of stainless-steel ball-mill medium under argon. The mixture was then treated by HEPBM at 600 rounds per minute (rpm) for 1 hour to obtain BP-PG.

Synthesis of BP@PG

To synthesize BP@PG, 500 mg of previously prepared BP was dispersed in 15 ml of anhydrous NMP and heated to 120 °C while stirring before adding 500 mg (-0.45 ml) of anhydrous distilled glycidol over 30 min using a syringe pump (1 ml/hr). The mixture was stirred at 120 °C for 72 hours and cooled down to room temperature thereafter. The solvent was extracted by lyophilization and the residue was washed by an water/acetone mixture (1:3 volume ratio) via centrifugation 4 times. The final product was dried under vacuum.

Metal removal

A simulated electronic waste leachate (EWL) was prepared by mixing equal amount of equal concentrations (weight/volume) of chromium(III) nitrate, copper(II) nitrate, iron(III) nitrate, zinc(II) nitrate, nickel(II) nitrate, and gold(III) chloride in acidic Millipore-quality water. The simulated electronic waste leachate was then diluted 10-fold with pH 1 water before adding BP-PG directly to form BP-PG-in-EWL dispersions with 250-1000 $\mu$g/ml BP-PG concentrations. The dispersions were left to stir for 5-60 min depending on the experiment. The stirring was then turned off and the BP-PG nanoparticles were left to sediment for some time to separate the nanoparticles from the EWL mixture. The supernatants were collected for analysis. To recover the gold nanoparticles, the AuNP@BP-PG was either left to degrade over time under ambient conditions, or forcibly oxidized by treatment with hydrogen peroxide ($H_2O_2$ 5-30% w/w) solution to finally obtain a purple-pink dispersion of gold nanoparticles.

Metal selectivity

Equal concentrations (1.0 mg/ml) of gold(III) chloride, chromium(III) nitrate, copper(II) nitrate, iron(III) nitrate, zinc(II) nitrate, and nickel(II) nitrate were placed in glass vials. A dispersion of BP-PG in pH 1 water (2.0 mg/ml) was added to the metal ion ($M^+$) solutions to finally form mixtures of 0.5 mg/ml of $M^+$ and 1.0 mg/ml of BP-PG, which were kept at room temperature until the sedimentation of the BP-PG nanoparticles. The supernatants were then extracted for analysis using AAS. The sediment and the recovered gold nanoparticles (AuNP) were analyzed via XPS, UV-Vis, and SEM.
The metal adsorption percentages were determined by comparing the initial and final concentrations of metal ions in the solutions, as follows:

$$M^+ \text{ Concentration After Treatment} = \frac{C_f}{C_i} \times 100$$

$C_f$ is the final concentration of $M^+$ after BP-PG treatment, and $C_i$ is the initial concentration of $M^+$ before treatment with BP-PG.

$Pd^{2+}$ and $Pt^{4+}$ Removal

A dispersion of BP-PG in water (250 $\mu$g/ml, pH 1) was mixed with a series of aqueous palladium(II) chloride and chloroplatinic(IV) acid hexahydrate solutions ($[M]^+ = [Pd^{2+}] = [Pt^{4+}] = 125, 250, 500, 750,$ and 1000 $\mu$g/ml, pH 1) for 60 min at room temperature. The nanoparticles were left to sediment for some time before collecting portions of the supernatants for UV-Vis analysis.

Gold recovery capacity of BP-PG, BP, BP@PG and AC

Dispersions of BP-PG, BP, BP@PG and AC in water (250 $\mu$g/ml, pH 1) were mixed with a series of aqueous gold(III) chloride solutions ($[M]+ = [Au^{3+}] = 125, 250, 500, 750,$ and 1000 $\mu$g/ml, pH 1) for 60 min at room temperature. The nanoparticles were left to sediment for some time before collecting portions of the supernatants for analysis. The recovery capacity was calculated using the following equation:

$$Recovery\ Capacity\ \left(\frac{mg}{mg}\right) = \frac{(C_i - C_f) \times V}{m}$$

where $C_i$ is the initial concentration of the $Au^{3+}$, $C_f$ is the final concentration of the $Au^{3+}$, $V$ is the volume of the treated solution, and $m$ is the mass of the nanomaterial used for the treatment.

Raman spectroscopy

Raman spectroscopy measurements were performed using a Horiba Xplora spectrometer equipped with an x/y piezo stage. Laser excitation for all measurements was set at 532 nm which was delivered through a 100x objective (Nikon®). To avoid thermal heating and/or degradation of the samples, the laser power was filtered to 1 % of the intensity for all measurements. All spectra were measured with 1 second accumulation time. Samples were deposited on silicon dioxide/silicon wafers (1 cm × 1 cm).
Statistical Raman spectroscopy (SRS) was conducted by measurement of Raman maps over sample regions deposited on Si or $SiO_2$/Si substrates. The average spectra were calculated from the maps and the Si-only spectra were filtered out. Accumulation time for each spectrum was set to 1 second. Substrate movement for the mapping was done using the motorized x/y piezo stage.

Powder X-ray diffraction

The measurements were conducted employing a Panalytical Empyrean diffractometer from Malvern Panalytical Ltd. A Cu (1.5406 A) source was utilized for sample measurement within the (10 - 90) Degrees 2 theta range, with a measurement step size of 0.255 Degrees per step. Each sample underwent a 19-minute measurement duration. Fe plates served as the background, and self-printed white polylactic acid holders were used for securing the samples.

Infrared spectroscopy

Infrared spectroscopy of the prepared nanomaterials and other reagents was conducted using a Perkin Elmer Spectrum Two FT-IR Spectrometer.

XPS

NAP-XPS (Near Ambient Pressure X-ray Photoelectron Spectroscopy) experiments were performed with an EnviroESCA spectrometer (SPECS Surface Nano Analysis GmbH, Berlin, Germany), equipped with a monochromatic Al $K\alpha$ X-ray source (Excitation Energy = 1486.71 eV) and a PHOIBOS 150 electron energy. Samples for XPS analysis were prepared on indium foil. The spectra were measured in normal emission, and a source-to-sample angle of 60° was used. All spectra were acquired in fixed analyzer transmission (FAT) mode. The binding energy scale of the instrument was calibrated, following a technical procedure provided by SPECS Surface Nano Analysis GmbH (calibration was performed according to ISO 15472). For quantification, the survey spectra were acquired at ultra-high vacuum conditions with a pass energy of 100 eV, and the spectra were quantified utilizing the empirical sensitivity factors that were provided by SPECS Surface Nano Analysis GmbH (the sensitivity factors were corrected with the transmission function of the spectrometer). For charge compensation, the highly-resolved XP spectra were acquired under near-ambient pressure conditions (5 mbar $H_2O$) with a pass energy of 50 eV, and the respective data were fitted using UNIFIT 2020 data processing software. For fitting, a Shirley background and a Gaussian/Lorentzian sum function [peak shape model GL (30)] were used. If not denoted otherwise, the L-G mixing component was set to 0.30 for all carbon peaks and to 0.40 for all heteroatom peaks. All binding energies were calibrated to the signal observed for the aliphatic C-C bond component ($E_{bind}$ = 285 eV) if not stated otherwise.

$^{31}$P-MAS-NMR

Solid-state phosphorus nuclear magnetic resonance spectroscopy was carried out on red phosphorus (RP), BP, BP (STS), BP (CVT), BP@PG, and BP-PG using a JEOL ECZ600 spectrometer operating at a 600 MHz proton resonance frequency, equivalent to $11 \times 6/5$ Tesla. Measurements involved normal single pulses at spinning rates of 12 and 16 kHz to verify the origin of sidebands, with a relaxation delay of 5 seconds. The rotor used had a diameter of 3.2 mm, and 1024 data points were acquired for this measurement.

To further ensure sample purity, a total suppression of spinning sidebands (TOSS) experiment was conducted, suppressing rotational sidebands with 1024 data points, a 5-second relaxation delay, and a rotational frequency of 16 kHz. Data processing included apodization (single exponential multiplication of 20 Hz for $^{31}$P), and zero-filling up to 2K. For the prepared BP@PG and BP-PG, measurements were performed using a normal single pulse at a spinning rate of 14 kHz, with a 3-second relaxation delay. The rotor, made of zirconium dioxide, had a diameter of 3.2 mm, and 2048 data points were acquired. Data processing involved apodization (single exponential multiplication of 20 Hz) and zero-filling up to 4K. All reported chemical shifts are relative to Adamantane ($^{13}$C) used as an external reference.

Liquid NMR spectroscopy

NMR spectra were acquired using either a Brucker AMX 500, Brucker Avance 400 spectrometer or Jeol ECP 500.

Zeta potential

Zeta potential (ZP) profiles were assessed using the Malvern Zetasizer Nano apparatus (Brookhaven Instruments Corp.) under room temperature conditions (25 °C). The samples were prepared at a concentration of 1 mg/ml in Millipore-quality water. The samples were introduced into disposable Folded Capillary Zeta Cells (DTS 1070, Malvern Panalytical). For every sample, three measurement runs were recorded, and the average of the recorded results was used.

Dynamic light scattering

Dynamic light scattering (DLS) measurements were performed using a Malvern Zetasizer Nano device (Brookhaven Instruments Corp.) at room temperature (25 °C). The samples were prepared at a concentration of 1 mg/ml in Millipore-quality water. The samples were introduced into 12mm Square Polystyrene Cuvettes (DTS0012, Malvern Panalytical). For every sample, three measurement runs were recorded, and the average of the recorded results was used.

Thermogravimetric analysis

For thermogravimetric analysis the PerkinElmer TGA 8000 thermobalance instrument was used. The measurements were carried out under a nitrogen atmosphere, and a consistent heating rate of 5 °C per minute was applied for all analyses. The temperature range for the analysis spanned from 30 °C to 800 °C. Aluminum oxide ($Al_2O_3$) crucibles were used to hold all samples, each weighing <25 mg.

Photothermal testing

For photothermal testing a near-infrared (NIR) fiber-optic laser was used with a wavelength of 808 nm and an intensity of 1 $W/cm^2$. The laser was positioned directly above Eppendorf Tubes® (0.2 ml, PCR clean, colorless). Measurements were captured using a forward-looking infrared thermography camera (FLIR, temperature range: 0-350 °C, Model EX, FLIR® Systems). Each sample had a volume of 100 $\mu$l and a sample concentration of 1 mg/ml.

Lyophilization

Freeze-drying (lyophilization) of all items was carried out using a Christ Alpha 1-2 LDplus device and Christ Alpha 3-4 LSCbasic for aqueous solvent removal and for organic solvent removal, respectively. The products were frozen with liquid nitrogen before mounting on the device.

Scanning electron microscopy (SEM)

The scanning electron microscope (Hitachi SU8030, Japan) was used to examine the surface morphology of the nanomaterials. The examination was conducted at an accelerating voltage ($V_{acc}$) of 15.0 - 30.0 kV, a current of 10.1 $\mu$A, and a working distance (WD) approximately set at 10.0 mm. Size distribution analysis of recovered $Au^0$ species was performed using imaged software.

UV-Vis spectroscopy

UV-Vis spectroscopy was performed using the PerkinElmer Lambda 950 UV/Vis/NIR spectrophotometer in the wavelength range of 200-900 nm. The samples were assessed using a UV Macro-Cuvette (Type 100-QS, 10 mm, Quartz Glass SUPRASIL® 200-2500 nm, Hellma Analytics). Millipore-quality water was used for all measurements.

Atomic absorption spectroscopy (AAS)

The elemental analysis of metal concentrations in the samples was performed using AAS on a PerkinElmer AAnalyst 200 instrument. The samples were brought to a known volume (5ml) with deionized water. Standard solutions of gold, chromium, copper, iron, zinc, and nickel were used to measure calibration curves. The samples and standards were introduced into the flame atomizer, and the absorbance signals were recorded at the characteristic wavelength for each metal. The instrument parameters, including the flame conditions and lamp currents, were optimized for maximum sensitivity and accuracy. All measurements were performed in triplicate, and the results were expressed as the mean $\pm$ standard deviation.

Mercury porosimetry

Mercury intrusion porosimetry (MIP) was performed using an AutoPore V instrument from Micromeritics Instrument Corporation. The MIP method is based on the principle that mercury, being a non-wetting fluid, can only enter the pore throats of a solid under increasing pressure. The pore diameter is inversely proportional to the applied pressure, as described by the Washburn equation. For this study, measurements were conducted across a low-pressure range from 0.0036 MPa to 0.3 MPa and a high-pressure range up to 400 MPa. This allowed for the determination of the pore size distribution across a range of approximately 3.6 nm to 400 $\mu$m. The principles underlying this technique are well-documented in the literature (Washburn, 1921; ISO 15901-1, 2016).

Cyclic voltammetry

Cyclic voltammetry experiments were conducted to investigate the electrochemical properties of the BP-PG nanomaterial. A 1 mg/ml suspension of BP-PG was prepared and drop-cast on a polished glassy carbon electrode, which served as the working electrode. A platinum wire and an Ag/AgCl electrode (3.5 M KCl) were used as the counter and reference electrodes, respectively. The electrochemical measurements were performed in a standard three-electrode cell containing water. The potential sweep was conducted from 0.0 V to 1.2 V versus the Ag/AgCl reference electrode at a scan rate of 50 mV/s. The experiments were carried out at room temperature (approximately 25°C), and the data were recorded and analyzed using Echem Analyst from Gamry Instruments©, focusing on the identification of oxidation peaks to elucidate the redox behavior of the BP-PG nanomaterial.

**Claims**

1. Method for synthesizing black phosphorus - polyglycerol (BP-PG) nanoparticles comprising the steps of:

   - adding (100) black phosphorus (BP) nanoparticles, glycidol and a plurality of beads (10) to a chamber (21) of a milling device (20);
   - rotating (200) the chamber (21) over a defined period of time.

2. The method of claim 1, **characterized in that** the black phosphorus (BP) nanoparticles and the glycidol are added to the chamber (21) in a mass ratio which ranges from 1:10 to 15:1, preferably from 1:10 to 10:1, and in particular is 1:1.

3. The method of claim 1 or 2, **characterized in that** the mass ratio of the beads (10) on the one hand and black phosphorus (BP) nanoparticles and glycidol on the other hand ranges from 25:1 to 125:1, preferably is 100:1.

4. The method of any of the preceding claims, **characterized in that** the period of time ranges from 1 min to 60 min, preferably is 15 min.

5. The method of any of the preceding claims, **characterized in that** glycidol undergoes an anion ring opening polymerization for functionalization of the black phosphorus (BP) nanoparticles during the step of rotating (200) the chamber (21).

6. The method of any of the preceding claims, **characterized in that** the black phosphorus (BP) nanoparticles are obtained from red phosphorus (RP) powder, the red phosphorus (RP) powder undergoing a method comprising the steps of:

   - adding (100) the red phosphorous powder and a plurality of beads (10) to a chamber (21) of a milling device (20); and
   - rotating (200) the chamber (21) over a defined period of time.

7. The method of claim 6, **characterized in that** the beads (10) and the red phosphorus (RP) powder are added to the chamber (21) in a mass ratio of 25:1 to 100:1.

8. The method of claim 6 or 7, **characterized in that** the period of time ranges from 1 min to 4 h, preferably is 1h.

9. The method of any of the preceding claims, **characterized in that** the beads (10) to be added with the black phosphorus (BP) nanoparticles and the glycidol to the chamber (21) and/or the beads (10) to be added with the red phosphorous (RP) powder to the chamber (21) are made of stainless steel.

10. The method of any of the preceding claims, **characterized in that** the chamber (21) containing the black phosphorus (BP) nanoparticles, the glycidol and the plurality of beads (10) and/or the red phosphorous (RP) powder and the plurality of beads (10) is rotated at a speed of 500 to 700 rpm, preferably 600 rpm.

11. Method for recovering a precious metal from a precious metal containing matrix comprising the steps of:

   - providing (300) the precious metal containing matrix in the form of a solution containing dissolved precious metal ions;
   - adding (400) black phosphorus - polyglycerol (BP-PG) nanoparticles to the solution, wherein the black phosphorus - polyglycerol (BP-PG) nanoparticles are synthesized using the method according to one of the preceding claims and/or adding mechanochemically synthesized black phosphorus (BP) nanoparticles;
   - stirring (500) the solution and the black phosphorus - polyglycerol (BP-PG) nanoparticles and/or the black phosphorus (BP) nanoparticles for allowing an electron transfer from the black phosphorus - polyglycerol (BP-PG) nanoparticles and/or the black phosphorus (BP) nanoparticles to the precious metal ions and for inducing precipitation of precious metal nanoparticles; and
- sedimentation (600) of the precious metal nanoparticles.

12. The method of claim 11, **characterized in that** the sedimentation step (600) is followed by an oxidation step (800), wherein an oxygen containing oxidizing agent is added for reaction with the black phosphorus - polyglycerol (BP-PG) nanoparticles and/or the black phosphorus (BP) nanoparticles to form $P_xO_y$ species.

13. The method of claim 11 or 12, **characterized in that** the precious metal is selected from the group comprising gold (Au), palladium (Pd), platinum (Pt) and silver (Ag).

14. The method of any of claims 11 to 13, **characterized in that** the black phosphorus (BP) nanoparticles are obtained from red phosphorus (RP) powder, the red phosphorus (RP) powder undergoing a method comprising the steps of:

- adding (100) the red phosphorous powder and a plurality of beads (10) to a chamber (21) of a milling device (20); and
- rotating (200) the chamber (21) over a defined period of time.

# FIG 1

# FIG 2

# FIG 3

HEPBM

4h, 600 RPM, 100:1 BPR

# FIG 4

# FIG 5

EP 4 717 669 A1

## FIG 6

## FIG 7

FIG 8

FIG 9

FIG 10

# FIG 11

## FIG 12

## FIG 13

## FIG 14

## FIG 15

# FIG 16

## FIG 17

## FIG 18

# FIG 19

## FIG 20

## FIG 21

## FIG 22

Europäisches
Patentamt

European
Patent Office

Office européen
des brevets

# EUROPEAN SEARCH REPORT

**Application Number**

EP 24 20 3295

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Bawadkji Obida ET AL: "High-Energy Approach to Polymer-Functionalized Black Phosphorus Nanomaterials", International Conference On Phosphorus, Boron and Silicon 2023, 23 March 2023 (2023-03-23), pages 1-127, XP093260246, Retrieved from the Internet: URL:https://premc.org/doc/PBSi2023/Book_of_Abstract_PBSi2023.pdf [retrieved on 2025-03-17] | 1,4,6,8, 10 | INV. C01B25/00 B22F9/04 B22F9/18 B82Y30/00 B82Y40/00 C01B25/02 C22B11/00 |
| Y | * pages 47-48 in PDF version; | 1-10 | |
| A | pages 40-41 * * the whole document * ----- | 11-14 | |
| Y | PEDERSEN SAMUEL V. ET AL: "Mechanochemical conversion kinetics of red to black phosphorus and scaling parameters for high volume synthesis", NPJ 2D MATERIALS AND APPLICATIONS, [Online] vol. 4, no. 1, 13 October 2020 (2020-10-13), XP093260265, ISSN: 2397-7132, DOI: 10.1038/s41699-020-00170-4 Internet Retrieved from the Internet: URL:https://www.nature.com/articles/s41699-020-00170-4> [retrieved on 2025-03-17] | 1,3,4, 6-10 | |
| | | | TECHNICAL FIELDS SEARCHED (IPC) |
| | | | C01B C22B B82Y C22C B22F |
| A | * the whole document * ----- -/-- | 2,5, 11-14 | |

The present search report has been drawn up for all claims

| Place of search | Date of completion of the search | Examiner |
|---|---|---|
| The Hague | 16 May 2025 | Konstantopoulos, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

## EUROPEAN SEARCH REPORT

Europäisches
Patentamt
European
Patent Office
Office européen
des brevets

**Application Number**

EP 24 20 3295

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BAWADKJI OBIDA ET AL: "One-Pot Covalent Functionalization of 2D Black Phosphorus by Anionic Ring Opening Polymerization - Bawadkji - 2022 - Advanced Materials Interfaces - Wiley Online Library", ADVANCED MATERIALS INTERFACES, [Online] vol. 9, no. 32, 16 September 2022 (2022-09-16), pages 1-19, XP093240504, DE ISSN: 2196-7350, DOI: 10.1002/admi.202201245 Retrieved from the Internet: URL:https://onlinelibrary.wiley.com/doi/10.1002/admi.202201245> [retrieved on 2025-01-17] | 1,4-6,8,10 | |
| A | * the whole document * | 2,3,7,9,11-14 | |
| Y | CN 117 285 718 A (THE SIXTH AFFILIATED HOSPITAL SUN YAT SEN UNIV) 26 December 2023 (2023-12-26) | 1,2,4,6,8,10 | |
| A | * the whole document * <br> * claim 7 * | 3,5,7,9,11-14 | |
| A | CN 109 880 029 A (INST APPLIED ECOLOGY CAS) 14 June 2019 (2019-06-14) * the whole document * | 1-14 | |
| A | CN 118 059 898 A (SHENZHEN INST OF ADV TECH CAS) 24 May 2024 (2024-05-24) * the whole document * | 1-14 | |

**TECHNICAL FIELDS SEARCHED (IPC)**

The present search report has been drawn up for all claims

| Place of search | Date of completion of the search | Examiner |
|---|---|---|
| The Hague | 16 May 2025 | Konstantopoulos, G |

| | Europäisches Patentamt<br>European Patent Office<br>Office européen des brevets | **Application Number**<br>EP 24 20 3295 |
|---|---|---|

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 24 20 3295

The Search Division considers that the present European patent application does not comply with the requirements of unity of invention and relates to several inventions or groups of inventions, namely:

1. claims: 1-10

   Method for synthesizing black phosphorus - polyglycerol (BP-PG) nanoparticles comprising the steps of:- adding (100) black phosphorus (BP) nanoparticles, glycidol and a plurality of beads (10) to a chamber (21) of a milling device (20);- rotating (200) the chamber (21) over a defined period of time.
   
   ---

2. claims: 11-14

   11. Method for recovering a precious metal from a precious metal containing matrix comprising the steps of:- providing (300) the precious metal containing matrix in the form of a solution containing dissolved precious metal ions;- adding (400) black phosphorus - polyglycerol (BP-PG) nanoparticles to the solution, wherein the black phosphorus - polyglycerol (BP-PG) nanoparticles are synthesized using the method according to one of the preceding claims and/or adding mechanochemically synthesized black phosphorus (BP) nanoparticles;- stirring (500) the solution and the black phosphorus - polyglycerol (BP-PG) nanoparticles and/or the black phosphorus (BP) nanoparticles for allowing an electron transfer from the black phosphorus - polyglycerol (BP-PG) nanoparticles and/or the black phosphorus (BP) nanoparticles to the precious metal ions and for inducing precipitation of precious metal nanoparticles; and- sedimentation (600) of the precious metal nanoparticles.
   
   ---

## ANNEX TO THE EUROPEAN SEARCH REPORT
## ON EUROPEAN PATENT APPLICATION NO.

EP 24 20 3295

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2025

| Patent document cited in search report | | Publication date | Patent family member(s) | Publication date |
|---|---|---|---|---|
| CN 117285718 | A | 26-12-2023 | NONE | |
| CN 109880029 | A | 14-06-2019 | NONE | |
| CN 118059898 | A | 24-05-2024 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DOMINIQUE LANIEL** ; **BJOERN WINKLER** ; **TIMO-FEY FEDOTENKO** ; **ANNA PAKHOMOVA** ; **STELLA CHARITON** ; **VICTOR MILMAN** ; **VITALI PRAKAPENKA** ; **LEONID DUBROVINSKY** ; **NATALIA DUBROVINSKAIA**. *CCDC 1986002: Experimental Crystal Structure Determination*, 2021

- **ZAGORAC, D** ; **MÜLLER, H** ; **RUEHL, S** ; **ZAGORAC, J.** ; **REHME, S**. *J. Appl. Cryst.*, 2019, vol. 52, 918-925